# EUROPÄISCHE PATENTSCHRIFT

(11) **EP 1 574 423 B1**
(45) Veröffentlichungstag und Bekanntmachung des Hinweises auf die Patenterteilung: **26.03.2008**
(21) Anmeldenummer: 05004096.3
(22) Anmeldetag: 25.02.2005
(51) Int. Cl.: B62D 25/16, B60R 21/34

(54) **Vorderbau für ein Kraftfahrzeug**
Front structure for a motor vehicle
Structure avant pour un véhicule automobile

(30) Priorität: 09.03.2004 DE 102004011333
(43) Veröffentlichungstag der Anmeldung: 14.09.2005
(73) Patentinhaber: GM Global Technology Operations, Inc., Detroit, MI 48265-3000 (US)
(72) Erfinder: Hirsch, Stefan, 64331 Weiterstadt (DE); Kreth, Laszlo, 64319 Pfungstadt (DE); Mildner, Udo, 65550 Limburg (DE); Renneisen, Ingo, 65239 Hochheim (DE)
(74) Vertreter: Daniel, Ulrich W.P.

(56) Entgegenhaltungen:
- EP-A- 1 090 818
- EP-A- 1 106 448
- DE-A1- 10 233 474
- DE-A1- 10 309 958
- GB-A- 2 362 615
- US-A1- 2002 063 443
- PATENT ABSTRACTS OF JAPAN Bd. 2000, Nr. 24, 11. Mai 2001 (2001-05-11) -& JP 2001 199366 A (TOYOTA MOTOR CORP), 24. Juli 2001 (2001-07-24)

## Beschreibung

Die Erfindung betrifft einen Vorderbau für ein Kraftfahrzeug mit in der vorgesehenen Fahrtrichtung gesehen vorderen Kotflügeln, mit einem auf Abstand unterhalb der Kotflügel angeordneten Karosserieteil und mit einer zwischen dem Karosserieteil und den Kotflügeln angeordneten Deformationseinrichtung, wobei die Deformationseinrichtung ein nachgiebiges, aus Kunststoff gefertigtes Füllstück aufweist und wobei das Füllstück einen Spalt zwischen dem Karosserieteil und dem Kotflügel verschließt.

Ein derartiger Vorderbau ist in der DE 102 33 474 A1 beschrieben. Das Füllstück erstreckt sich demnach zwischen dem Karosserieteil und dem darüberliegenden, der Motorhaube zugewandten und sich schon nahezu horizontal erstreckenden Endabschnitt des Kotflügels. Der Bereich zwischen dem Seitenteil des Kotflügels und dem Füllstück ist frei.

Zum Stand der Technik ist auch die DE 29 34 060 A1 zu nennen. Die Deformationseinrichtung dieses Vorderbaus hat ein im Querschnitt halbkreisförmig gebogenes Blech zwischen der inneren Kante des Kotflügels und dem darunter liegenden Karosserieteil. Schlägt bei einem Unfall der Kopf eines Fußgängers vertikal auf den Kotflügel, nimmt die Deformationseinrichtung die Stoßenergie auf, wodurch der Kopfaufprall weich erfolgen soll.

Weiterhin ist aus der EP 1 129 928 B1 ein Vorderbau bekannt geworden, bei dem die Deformationseinrichtung ebenfalls ein halbkreisförmiges, den Kotflügel vertikal abstützendes Blech sowie ein zwischen dem Karosserieteil und einem Seitenbereich des Kotflügel angeordnetes Abstützteil aufweist.

Nachteilig bei den bekannten Vorderbauten ist jedoch deren geringe Steifigkeit im Betrieb des Kraftfahrzeuges, welche sich aus der Anforderung an die vertikale Nachgiebigkeit des Kotflügels ergibt. Durch ein Anlehnen an den Kotflügel kann im ungünstigsten Fall der Kotflügel an eine zwischen den Kotflügeln angeordnete Haube anstoßen. Weiterhin ist bei den bekannten Vorderbauten nachteilig, dass Motorgeräusche zwischen dem Kotflügel und dem Karosserieteil nach außen dringen können.

Weiterhin ist aus der EP 1 132 263 A1 eine Kotflügelanordnung für ein Kraftfahrzeug bekannt geworden, bei der ein mit dem Kotflügel verbundenes Blech mehrere einzelne Laschen als Deformationsglieder aufweist. Das die Deformationsglieder aufweisende Blech ist über einen Klebstoffwulst mit dem Kotflügel verbunden und stützt diesen seitlich ab. Nachteilig bei der Kotflügelanordnung ist jedoch, dass eine ungenaue Kleberauftragung zu einer Deformation des Kotflügels führen kann. Weiterhin dringen bei dieser Kotflügelanordnung zwischen den Laschen Motorgeräusche nach außen.

Der Erfindung liegt das Problem zugrunde, einen Vorderbau der eingangs genannten Art so zu gestalten, dass er bei einem Fußgängeraufprall ausreichend nachgiebig gestaltet ist, jedoch im Betrieb eine ausreichende Stabilität aufweist. Z. B. sollte ein Anstoßen der Kotflügel an eine zwischen den Kotflügeln angeordnete Haube durch ein Anlehnen oder eine Wäsche des Kraftfahrzeugs vermieden werden.

Dieses Problem wird erfindungsgemäß dadurch gelöst, dass das Füllstück den Seitenbereich des Kotflügels seitlich abstützt.
Dadurch nimmt das Füllstück seitlich in den Kotflügel eingeleitete Kräfte auf. Hierzu ist das Füllstück zumindest teilweise zwischen dem Seitenbereich der Kotflügel und dem Karosserieteil anzuordnen.

Durch diese Gestaltung lässt sich die Steifigkeit der Deformationseinrichtung an den einzelnen Stellen des Kotflügels durch eine entsprechende Ausgestaltung des Füllstücks einstellen. Das Füllstück vermag den Kotflügel flächig abstützen und damit im Betrieb des Kraftfahrzeuges auftretende Kräfte aufzunehmen. Eine zusätzlich anzuordnende Verkleidung zur Verhinderung eines Austritts von Motorgeräuschen zwischen dem Kotflügel und dem Karosserieteil ist dank der Erfindung nicht erforderlich, da das Füllstück bei entsprechender Materialwahl schalldämmend gestaltet sein kann und den von den Deformationsgliedern erzeugten Spalt zwischen Karosserieteil und Kotflügel verdeckt.

Im einfachsten Fall weist daher die Deformationseinrichtung ausschließlich das Füllstück auf. Zur weiteren Vereinfachung der Einstellung der vorgesehenen Steifigkeit der Deformationseinrichtung trägt es gemäß einer vorteilhaften Weiterbildung der Erfindung bei, wenn die Deformationseinrichtung aus Blech gefertigte Deformationsglieder aufweist und wenn das Füllstück zwischen den Deformationsgliedern angeordnet ist. Durch diese Gestaltung lassen sich zusätzlich zu dem Füllstück die aus Blech gefertigten Deformationsglieder an vorgesehenen Stellen anordnen, an denen eine ausschließliche Abstützung durch das Füllstück nur unzureichend ist.

Zur weiteren Verbesserungen der Schalldämmung des Bereichs zwischen dem Kotflügel und dem Karosserieteil des erfindungsgemäßen Vorderbaus trägt es bei, wenn sich das Füllstück in Fahrtrichtung gesehen über die gesamte Länge des Kotflügels erstreckt.

Die Montage des erfindungsgemäßen Vorderbaus erfordert einen besonders geringen Aufwand, wenn das Füllstück einstückig gefertigt ist.

Das Füllstück vermag gemäß einer vorteilhaften Weiterbildung der Erfindung eine Übertragung von Schall sehr stark zu dämmen, wenn das Füllstück an seiner an dem Kotflügel anliegenden Seite eine Schicht Moosgummi aufweist.

Zur weiteren Vereinfachung der Montage des erfindungsgemäßen Vorderbaus trägt es bei, wenn das Füllstück mit dem Karosserieteil und/oder dem Kotflügel verklebt ist.

Ein Austreten von Motorraumgasen zwischen dem Kotflügel und dem Karosserieteil lässt sich gemäß einer anderen vorteilhaften Weiterbildung der Erfindung einfach vermeiden, wenn das Füllstück den Raum zwischen dem Kotflügel und dem Karosserieteil gasdicht verschließt.

Die Festlegung der Stabilität des Füllstücks bei einem Kopfaufprall auf den Kotflügel gestaltet sich gemäß einer anderen vorteilhaften Weiterbildung der Erfindung besonders einfach, wenn das Füllstück Deformationsstege aufweist. Die Deformationsstege können beispielsweise waben- oder kreissegmentförmig oder als vertikale Knickstäbe ausgebildet sein.

Die Deformationsstege lassen sich gemäß einer anderen vorteilhaften Weiterbildung der Erfindung mit sehr großen Abmessungen versehen und bis in den Seitenbereich des Kotflügels führen, wenn ein die Deformationsstege aufweisender Abschnitt des Füllstücks zwischen Verschraubungsstellen mit dem Kotflügel und/oder dem Karosserieteil angeordnet ist.

Das Füllstück weist gemäß einer anderen vorteilhaften Weiterbildung der Erfindung in horizontaler Richtung eine hohe Stabilität und in vertikaler Richtung eine nahezu beliebig einstellbare Stabilität auf, wenn die Deformationsstege vertikal geneigt von dem Kotflügel zu dem Karosserieteil und horizontal bis zu dem Seitenbereich des Kotflügels geführt sind.

Das Füllstück lässt sich gemäß einer anderen vorteilhaften Weiterbildung der Erfindung zumindest in Teilbereichen mit einer hohen Elastizität versehen, wenn das Füllstück eine wellenförmige Struktur hat, wobei Wellungen des Füllstücks parallel zu der an den Kotflügel angrenzenden Kante angeordnet sind.

Die Montage und Demontage des Kotflügels gestalten sich konstruktiv besonders einfach, wenn das Füllstück mit dem Karosserieteil und/oder dem Kotflügel verschraubt ist.

Zur weiteren Vereinfachung der Montage des erfindungsgemäßen Vorderbaus trägt es bei, wenn das Füllstück zur Halterung von in einem Motorraum zu verlegenden Bauteilen vorgesehene Haltemittel hat. Im einfachsten Fall sind die Haltemittel als Klammern ausgebildet. In diese Klammern lassen sich beispielsweise Kabelbäume und Bowdenzüge verrasten.

Verschiedene Bauteile lassen sich im erfindungsgemäßen Vorderbau einfach unterbringen, wenn das Füllstück eine von einer Blende verdeckte Kammer aufweist. Durch diese Gestaltung lassen sich beispielsweise die Bowdenzüge oder Kabelbäume in dem Füllstück ablegen.

Die Montage des Füllstücks erfordert gemäß einer anderen vorteilhaften Weiterbildung der Erfindung einen besonders geringen Aufwand, wenn die Blende über ein Filmscharnier mit einer seitlichen Begrenzung der Kammer verbunden ist.

Die Steifigkeit der Deformationseinrichtung lässt sich gemäß einer anderen vorteilhaften Weiterbildung der Erfindung einfach einstellen, wenn die Deformationsglieder einen U-förmig gebogenen Abschnitt aufweisen, mit ihrer Basis an dem Kotflügel befestigt sind und mit Schenkeln auf das Karosserieteil zuweisen.

Eine plastische Verformung der Deformationseinrichtung lässt sich gemäß einer anderen vorteilhaften Weiterbildung der Erfindung einfach vermeiden, wenn sich an den der Basis abgewandten Enden der Schenkel des U-förmigen Abschnitts der Deformationsglieder parallel zu dem Karosserieteil geführte Abschnitte anschließen und wenn sich an den parallel geführten Abschnitten auf das Karosserieteil zuweisende Schenkel anschließen. Die parallel zu dem Kotflügel geführten Abschnitte ermöglichen eine geringfügige elastische Nachgiebigkeit der Deformationsglieder.

Bei einem Kopfaufprall auftretende Kräfte lassen sich gemäß einer anderen vorteilhaften Weiterbildung der Erfindung unbeeinflusst von der seitlichen Abstützung des Kotflügels dämpfen, wenn die Deformationsglieder den Kotflügel ausschließlich vertikal abstützen. Das den Kotflügel seitlich abstützende Füllstück beeinflusst nicht die vertikale Nachgiebigkeit des Kotflügels.

Die Deformationsglieder lassen sich gemäß einer anderen vorteilhaften Weiterbildung der Erfindung besonders kostengünstig, beispielsweise durch Punktschweißen an dem Kotflügel montieren, wenn die Deformationsglieder an einem, der Haube zugewandten Begrenzung der Kotflügel angeordneten Wasserkanal befestigt sind. Ein solcher Wasserkanal wird von der Haube verdeckt und ist damit im montierten Zustand des Kraftfahrzeuges nicht zu sehen.

Der erfindungsgemäße Vorderbau gestaltet sich konstruktiv besonders einfach, wenn die Deformationsglieder als einzelne, an dem Kotflügel und dem Karosserieteil befestigte Baueile ausgebildet sind. Weiterhin ermöglicht die Fertigung der Deformationsglieder als einzelne Bauteile eine besonders einfache Festlegung der Stabilität der Deformationseinrichtung.

Die Erfindung lässt verschiedene Ausführungsformen zu. Zur weiteren Verdeutlichung ihres Grundprinzips sind mehrere davon in der Zeichnung dargestellt und werden nachfolgend beschrieben. Die Zeichnung zeigt in
- Fig. 1: einen rechten Teilbereich eines erfindungsgemäßen Vorderbaus eines Kraftfahrzeuges im Querschnitt,
- Fig. 2: eine Schnittdarstellung durch den erfindungsgemäßen Vorderbau aus Figur 1 entlang der Linie II - II,
- Fig. 3: eine perspektivische Darstellung eines Kotflügels des erfindungsgemäßen Vorderbaus vor der Montage,
- Fig. 4: eine perspektivische Darstellung einer weiteren Ausführungsform des erfindungsgemäßen Vorderbaus,
- Fig. 5: eine alternative Ausführungsform eines Füllstücks aus Figur 4,
- Fig. 6: eine alternative Ausführungsform des Füllstücks aus Figur 4,
- Fig. 7: eine vergrößerte Schnittdarstellung durch den Vorderbau aus Figur 4 entlang der Linie VII - VII,
- Fig. 8: eine vergrößerte Schnittdarstellung durch den Vorderbau aus Figur 4 entlang der Linie VIII - VIII,
- Fig. 9: eine vergrößerte Schnittdarstellung durch den Vorderbau aus Figur 4 entlang der Linie IX - IX,
- Fig. 10: eine vergrößerte Schnittdarstellung durch den Vorderbau aus Figur 4 entlang der Linie X - X,
- Fig. 11: einen Querschnitt durch eine weitere Ausführungsform des Füllstücks aus Figur 4.

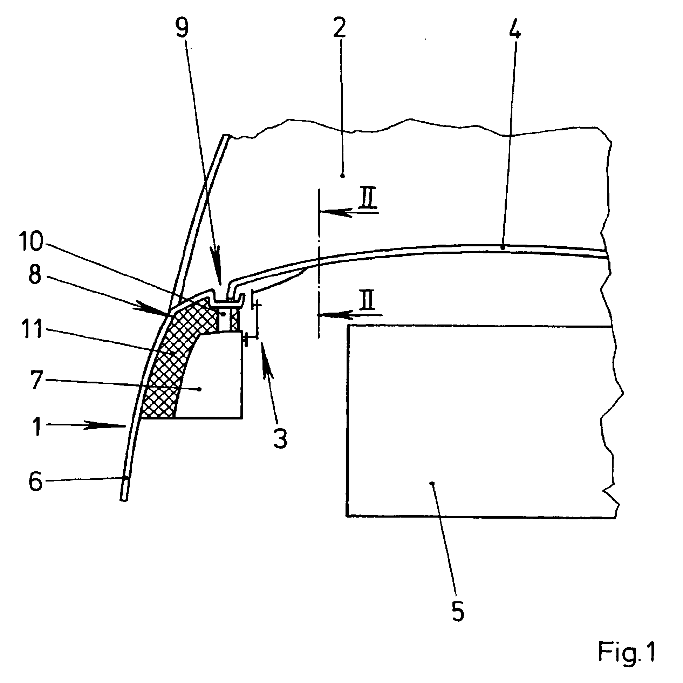

Figur 1 zeigt einen rechten Teilbereich eines Vorderbaus 1 eines Kraftfahrzeugs im Querschnitt und eine sich an den Vorderbau 1 anschließende Frontscheibe 2. Der Vorderbau 1 hat eine an einem Scharnier 3 schwenkbar gelagerte Haube 4, welche in ihrer eingezeichneten Lage eine schematisch dargestellte Brennkraftmaschine 5 des Kraftfahrzeuges überdeckt. Seitlich wird der Vorderbau 1 von einem Kotflügel 6 begrenzt. Der Kotflügel 6 ist an einem ebenfalls schematisch dargestellten Karosserieteil 7 über eine Deformationseinrichtung 8 befestigt. An seiner an die Haube 4 angrenzenden Kante hat der Kotflügel 6 einen Wasserkanal 9. Eine seitliche Begrenzung der Haube 4 ragt in den Wasserkanal 9 hinein.

Die Deformationseinrichtung 8 hat ein aus Blech gefertigtes Deformationsglied 10 und ein aus Kunststoff gefertigtes Füllstück 11. Das Füllstück 11 stützt den Seitenbereich des Kotflügels 6 an dem Karosserieteil 7 ab. Das Deformationsglied 10 ist an der Unterseite des Wasserkanals 9 befestigt und stützt vertikal auf den Kotflügel 6 einwirkende Kräfte an dem Karosserieteil 7 ab. Das Füllstück 11 ist in einem Raum zwischen dem Kotflügel 6 und dem Karosserieteil 7 eingeklebt und verleiht dem Kotflügel 6 die notwendige seitliche Steifigkeit. Gleichzeitig dichtet es den Raum der Brennkraftmaschine 5 gegen austretende Gase und Schall ab.

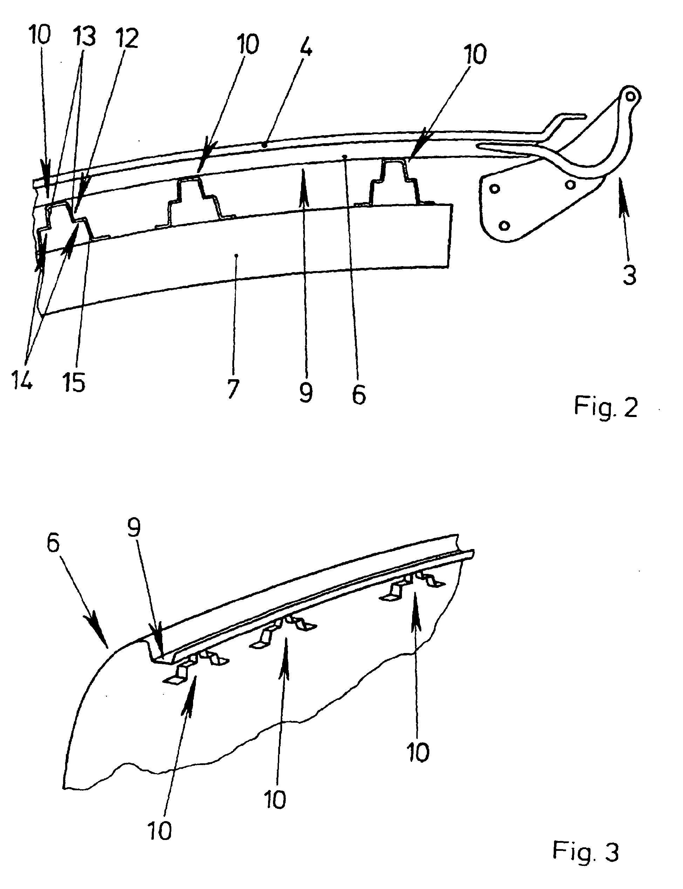

Figur 2 zeigt den Vorderbau aus Figur 1 in einer Schnittdarstellung entlang der Linie II - II. Hierbei ist zu erkennen, dass mehrere einzelne Deformationsglieder 10 zwischen dem Kotflügel 6 und der Haube 4 befestigt sind. Die Deformationsglieder 10 sind voneinander beabstandet. Zur Vereinfachung der Zeichnung ist das Füllstück 11 aus Figur 1 nicht dargestellt. Die Deformationsglieder 10 weisen jeweils einen U-förmigen Abschnitt 12 auf. Die Basis des U-förmigen Abschnitts 12 ist an der Unterseite des Wasserkanals 9 des Kotflügels 6 beispielsweise durch Punktschweißung befestigt. An den dem Kotflügel 6 abgewandten Enden der Schenkel 13 des U-förmigen Abschnitts 12 sind parallel zu dem Karosserieteil 7 geführte Abschnitte 14 angeordnet. An den parallel zu dem Karosserieteil geführten Abschnitten 14 schließen sich auf das Karosserieteil 7 zulaufende Schenkel 15 an, deren freie Enden mit dem Karosserieteil 7 verbunden sind.

Figur 3 zeigt in einer perspektivischen Schnittdarstellung einen Teilbereich des Kotflügels 6 aus den Figuren 1 und 2 mit den daran befestigten Deformationsgliedern 10. Zur Vereinfachung der Zeichnung ist das Füllstück 11 aus Figur 1 nicht dargestellt. Hierbei ist zu erkennen, dass die Deformationsglieder 10 ausschließlich im Bereich des Wasserkanals 9 des Kotflügels 6 angeordnet sind und damit vertikal in den Kotflügel 6 eingeleitete Kräfte dämpfen. Solche Kräfte können bei einem Kopfaufprall eines Fußgängers auftreten.

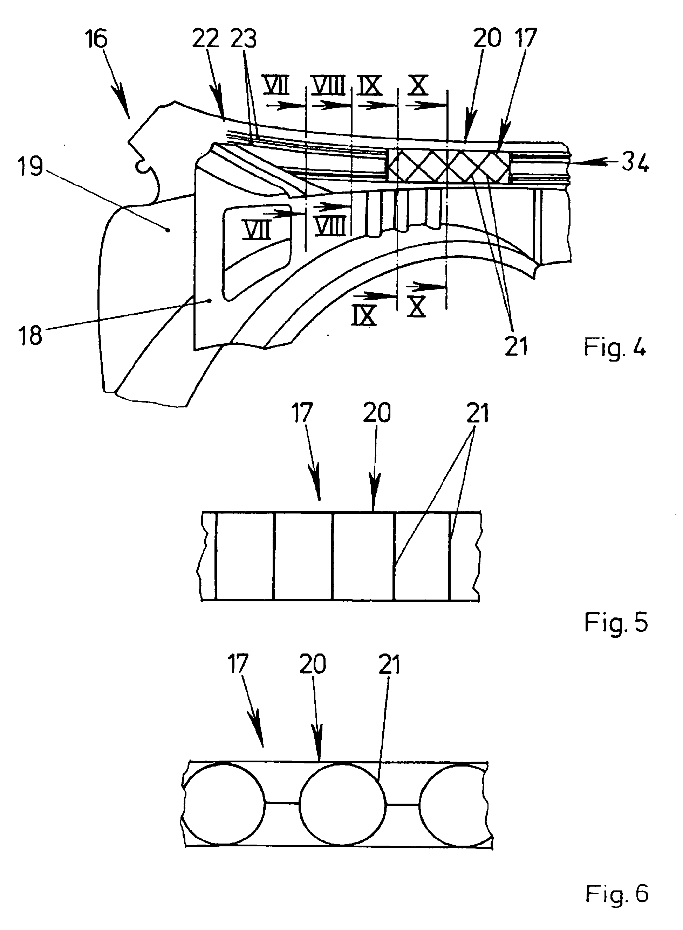

Figur 4 zeigt perspektivisch eine weitere Ausführungsform des Vorderbaus 16, bei dem eine Deformationseinrichtung 34 ein Füllstück 17 aus Kunststoff aufweist und einen Spalt zwischen einem Karosserieteil 18 und einem Kotflügel 19 von der Motorraumseite aus gesehen verschließt. Das Füllstück 17 weist einen Abschnitt 20 mit Deformationsstegen 21 und einen Abschnitt 22 mit Wellungen 23 auf. Die Deformationsstege 21 sind rautenförmig zueinander und vertikal geneigt angeordnet und erstrecken sich horizontal bis nahe an die Innenseite des Kotflügels 19.

Figur 5 zeigt eine alternative Ausführungsform des Füllstücks 17 aus Figur 4 mit dem die Deformationsstege 21 aufweisenden Abschnitt 20. Die Deformationsstege 21 sind hier vertikal angeordnet und damit als Knickstäbe ausgebildet. Bei senkrechter Belastung knicken die Deformationsstege 21 und ermöglichen daher ein Nachgeben des in Figur 4 dargestellten Kotflügels 19 bei einem Kopfaufprall eines Fußgängers. Figur 6 zeigt eine weitere Ausführungsform des die Deformationsstege 21 aufweisenden Abschnitts 20 des Füllstücks 17 aus Figur 4. Die Deformationsstege 21 sind hier kreissegmentförmig angeordnet. Die als Knickstäbe ausgebildeten oder kreissegmentförmig angeordneten Deformationsstege 21 können alternativ oder zusätzlich zu den in Figur 4 dargestellten, rautenförmig angeordneten Deformationsstegen 21 vorgesehen sein.

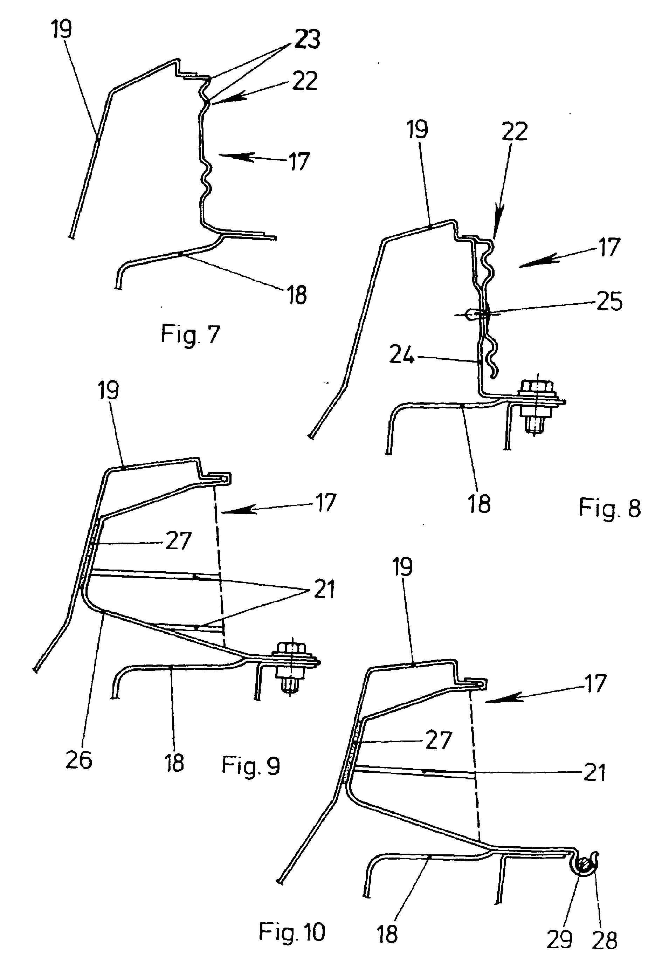

Figur 7 zeigt vergrößert eine Schnittdarstellung durch das Füllstück 17 aus Figur 4 mit angrenzenden Bereichen des Kotflügels 19 und des Karosserieteils 18 entlang der Linie VII - VII. Hierbei ist zu erkennen, dass die Wellungen 23 des wellenförmigen Abschnitts 22 des Füllstücks 17 parallel zu der dem Kotflügel 19 zugewandten Begrenzung angeordnet sind. Diese Wellungen 23 ermöglicht ein Falten des Füllstücks 17 bei einem Kopfaufprall eines Fußgängers auf den Kotflügel 19.

Figur 8 zeigt vergrößert eine Schnittdarstellung durch den Vorderbau 16 aus Figur 4 entlang der Linie VIII - VIII im Bereich einer Befestigung des Kotflügels 19 an dem Karosserieteil 18. Der Kotflügel 19 ist einstückig mit einem bis zu dem Karosserieteil 18 geführten Deformationsglied 24 gefertigt. Das Deformationsglied 24 ist mit dem Karosserieteil 18 verschraubt. Das Füllstück 17 ist über einen Klipp 25 an dem Deformationsglied 24 befestigt.

Figur 9 zeigt vergrößert eine Schnittdarstellung durch das Füllstück 17 aus Figur 4 entlang der Linie IX - IX im Bereich seiner Befestigung an dem Karosserieteil 18. Hierbei ist zu erkennen, dass das Füllstück 17 eine bogenförmige Wandung 26 hat und die Deformationsstege 21 innerhalb der bogenförmigen Wandung 26 angeordnet sind. Die bogenförmige Wandung 26 ist mit dem Karosserieteil 18 verschraubt und ist an seinem den Kotflügel 19 seitlich abstützenden Bereich mit einer Schicht Moosgummi 27 beklebt.

Figur 10 zeigt vergrößert in einer Schnittdarstellung durch den Vorderbau 16 aus Figur 4 entlang der Linie X - X, dass ein klammerförmiges Haltemittel 28 einstückig mit dem Füllstück 17 gefertigt ist. Das Haltemittel 28 haltert einen in dem Vorderbau 16 verlegten Kabelbaum 29 oder Bowdenzug.

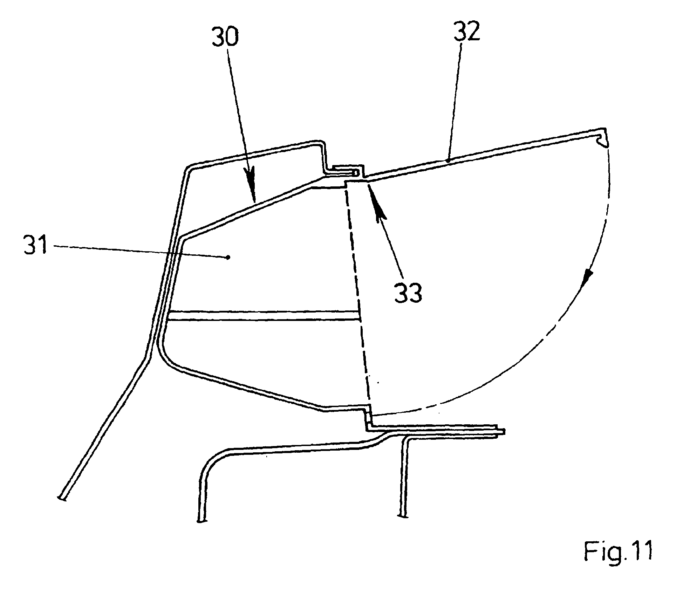

Figur 11 zeigt einen Querschnitt durch ein Füllstück 30, welches sich von dem aus Figur 4 nur dadurch unterscheidet, dass eine Kammer 31 zur Aufnahme von beliebigen, nicht dargestellten Bauteilen von einer Blende 32 verschließbar ist. Die Blende 32 ist über ein Filmscharnier 33 an dem Füllstück 30 angelenkt und lässt sich an diesem verrasten.

### Bezugszeichenliste

- 1: Vorderbau
- 2: Frontscheibe
- 3: Scharnier
- 4: Haube
- 5: Brennkraftmaschine

- 6: Kotflügel
- 7: Krosserieteil
- 8: Deformations- einrichtung
- 9: Wasserkanal
- 10: Deformationsglied

- 11: Füllstück
- 12: Abschnitt
- 13: Schenkel
- 14: Abschnitt
- 15: Schenkel

- 16: Vorderbau
- 17: Füllstück
- 18: Krosserieteil
- 19: Kotflügel
- 20: Abschnitt

- 21: Deformationssteg
- 22: Abschnitt
- 23: Wellung
- 24: Deformationsglied
- 25: Klipp

- 26: Wandung
- 27: Moosgummi
- 28: Haltemittel
- 29: Kabelbaum
- 30: Füllstück

- 31: Kammer
- 32: Blende
- 33: Filmscharnier
- 34: Deformations- einrichtung

## Patentansprüche

1. Vorderbau (1, 16) für ein Kraftfahrzeug mit in der vorgesehenen Fahrtrichtung gesehen vorderen Kotflügeln (6, 19), mit einem auf Abstand unterhalb der Kotflügel (6, 19) angeordneten Karosserieteil (7, 18) und mit einer zwischen dem Karosserieteil (7, 18) und den Kotflügeln (6, 19) angeordneten Deformationseinrichtung (8, 34), wobei die Deformationseinrichtung (8, 34) ein nachgiebiges, aus Kunststoff gefertigtes Füllstück (11, 17, 30) aufweist und wobei das Füllstück (11, 17, 30) einen Spalt zwischen dem Karosserieteil (7, 18) und dem Kotflügel (6, 19) verschließt, **dadurch gekennzeichnet, dass** das Füllstück (11, 17, 30) den Seitenbereich des Kotflügels (7, 19) seitlich abstützt.

2. Vorderbau (1, 16) nach Anspruch 1, **dadurch gekennzeichnet, dass** die Deformationseinrichtung (8, 34) aus Blech gefertigte Deformationsglieder (10, 24) aufweist und dass das Füllstück (11, 17, 30) zwischen den Deformationsgliedern (10, 24) angeordnet ist.

3. Vorderbau (1, 16) nach Anspruch 1 oder 2, **dadurch gekennzeichnet, dass** sich das Füllstück (11, 17, 30) in Fahrtrichtung gesehen über die gesamte Länge des Kotflügels (6, 19) erstreckt.

4. Vorderbau (1, 16) nach zumindest einem der vorhergehenden Ansprüche, **dadurch gekennzeichnet, dass** das Füllstück (11, 17, 30) einstückig gefertigt ist.

5. Vorderbau (16) nach zumindest einem der vorhergehenden Ansprüche, **dadurch gekennzeichnet, dass** das Füllstück (17) an seiner an dem Kotflügel (19) anliegenden Seite eine Schicht Moosgummi (27) aufweist.

6. Vorderbau (1, 16) nach zumindest einem der vorhergehenden Ansprüche, **dadurch gekennzeichnet, dass** das Füllstück (11, 17, 30) mit dem Karosserieteil (7, 18) und/oder dem Kotflügel (6, 19) verklebt ist.

7. Vorderbau (1, 16) nach zumindest einem der vorhergehenden Ansprüche, **dadurch gekennzeichnet, dass** das Füllstück (11, 17, 30) den Raum zwischen dem Kotflügel (6, 19) und dem Karosserieteil (7, 18) gasdicht verschließt.

8. Vorderbau (16) nach zumindest einem der vorhergehenden Ansprüche, **dadurch gekennzeichnet, dass** das Füllstück (17, 30) Deformationsstege (21) aufweist.

9. Vorderbau (16) nach Anspruch 8, **dadurch gekennzeichnet, dass** ein die Deformationsstege (21) aufweisender Abschnitt (20) des Füllstücks (17, 30) zwischen Verschraubungsstellen mit dem Kotflügel (19) und/oder dem Karosserieteil (18) angeordnet ist.

10. Vorderbau (16) nach Anspruch 8 oder 9, **dadurch gekennzeichnet, dass** die Deformationsstege (21) vertikal geneigt von dem Kotflügel (19) zu dem Karosserieteil (18) und horizontal bis zu dem Seitenbereich des Kotflügels (19) geführt sind.

11. Vorderbau (16) nach zumindest einem der vorhergehenden Ansprüche, **dadurch gekennzeichnet, dass** das Füllstück (17) eine wellenförmige Struktur hat, wobei Wellungen (23) des Füllstücks (17) parallel zu der an den Kotflügel (19) angrenzenden Kante angeordnet sind.

12. Vorderbau (16) nach zumindest einem der vorhergehenden Ansprüche, **dadurch gekennzeichnet, dass** das Füllstück (17) mit dem Karosserieteil (18) und/oder dem Kotflügel (19) verschraubt ist.

13. Vorderbau (16) nach zumindest einem der vorhergehenden Ansprüche, **dadurch gekennzeichnet, dass** das Füllstück (17) zur Halterung von in einem Motorraum zu verlegenden Bauteilen vorgesehene Haltemittel (28) hat.

14. Vorderbau (16) nach zumindest einem der vorhergehenden Ansprüche, **dadurch gekennzeichnet, dass** das Füllstück (30) eine von einer Blende (32) verdeckte Kammer (31) aufweist.

15. Vorderbau (16) nach zumindest einem der vorhergehenden Ansprüche, **dadurch gekennzeichnet, dass** die Blende (32) über ein Filmscharnier (33) mit einer seitlichen Begrenzung der Kammer (31) verbunden ist.

16. Vorderbau (16) nach zumindest einem der vorhergehenden Ansprüche, **dadurch gekennzeichnet, dass** die Deformationsglieder (10) einen U-förmig gebogenen Abschnitt (12) aufweisen, mit ihrer Basis an dem Kotflügel (6) befestigt sind und mit Schenkeln (13) auf das Karosserieteil (7) zuweisen.

17. Vorderbau (16) nach Anspruch 16, **dadurch gekennzeichnet, dass** sich an den der Basis abgewandten Enden der Schenkel (13) des U-förmigen Abschnitts (12) der Deformationsglieder (10) parallel zu dem Karosserieteil (7) geführte Abschnitte (14) anschließen und dass sich an den parallel geführten Abschnitten (14) auf das Karosserieteil (7) zuweisende Schenkel (15) anschließen.

18. Vorderbau (16) nach zumindest einem der Ansprüche 2 bis 17, **dadurch gekennzeichnet, dass** die Deformationsglieder (10) den Kotflügel (6) ausschließlich vertikal abstützen.

19. Vorderbau (16) nach zumindest einem der Ansprüche 2 bis 18, **dadurch gekennzeichnet, dass** die Deformationsglieder (10) als einzelne, an dem Kotflügel (6) und dem Karosserieteil (7) befestigte Bauteile ausgebildet sind.

20. Vorderbau (16) nach zumindest einem der Ansprüche 2 bis 19, **dadurch gekennzeichnet, dass** die Deformationsglieder (10) an einem, der Haube (4) zugewandten Begrenzung der Kotflügel (6) angeordneten Wasserkanal (9) befestigt sind.

## Claims

1. Front structure (1, 16) for a motor vehicle with, viewed in the direction of travel, front wing elements (6, 19), with a body part (7, 18) disposed at a spacing below the wing elements (6, 19) and with a deformation device (8, 34) disposed between the body part (7, 18) and the wing elements (6, 19), wherein the deformation device (8, 34) comprises a flexible filling piece (11, 17, 30) made of plastics material, and wherein the filling piece (11, 17, 30) closes a gap between the body part (7, 18) and the wing element (6, 19), **characterised in that** the filling piece (11, 17, 30) laterally supports the side region of the wing element (7, 19).

2. Front structure (1, 16) according to Claim 1, **characterised in that** the deformation device (8, 34) comprises deformation members (10, 24) made of sheet metal, and that the filling piece (11, 17, 30) is disposed between the deformation members (10, 24).

3. Front structure (1, 16) according to Claim 1 or 2, **characterised in that**, viewed in the direction of travel, the filling piece (11, 17, 30) extends over the entire length of the wing element (6, 19).

4. Front structure (1, 16) according to at least one of the preceding Claims, **characterised in that** the filling piece (11, 17, 30) is made in one piece.

5. Front structure (16) according to at least one of the preceding Claims, **characterised in that** the filling piece (17) comprises a layer of cellular rubber (27) on its side which lies against the wing element (19).

6. Front structure (1, 16) according to at least one of the preceding Claims, **characterised in that** the filling piece (11, 17, 30) is adhered to the body part (7, 18) and/or the wing element (6, 19).

7. Front structure (1, 16) according to at least one of the preceding Claims, **characterised in that** the filling piece (11, 17, 30) seals the space between the wing element (6, 19) and the body part (7, 18) in a gastight manner.

8. Front structure (16) according to at least one of the preceding Claims, **characterised in that** the filling piece (17, 30) comprises deformation webs (21).

9. Front structure (16) according to Claim 8, **characterised in that** a portion (20) of the filling piece (17, 30) which comprises the deformation webs (21) is disposed between screwing points with the wing element (19) and/or the body part (18).

10. Front structure (16) according to Claim 8 or 9, **characterised in that** the deformation webs (21) extend in a vertically inclined manner from the wing element (19) to the body part (18) and horizontally up to the side region of the wing element (19).

11. Front structure (16) according to at least one of the preceding Claims, **characterised in that** the filling piece (17) has an undulating structure, wherein undulations (23) of the filling piece (17) are disposed parallel to the edge which is adjacent to the wing element (19).

12. Front structure (16) according to at least one of the preceding Claims, **characterised in that** the filling piece (17) is screwed to the body part (18) and/or the wing element (19).

13. Front structure (16) according to at least one of the preceding Claims, **characterised in that** the filling piece (17) has retaining means (28) which are provided to retain components which are to be installed in an engine compartment.

14. Front structure (16) according to at least one of the preceding Claims, **characterised in that** the filling piece (30) comprises a chamber (31) which is covered by a panel (32).

15. Front structure (16) according to at least one of the preceding Claims, **characterised in that** the panel (32) is connected to a lateral boundary of the chamber (31) by way of a film hinge (33).

16. Front structure (16) according to at least one of the preceding Claims, **characterised in that** the deformation members (10) comprise a portion (12) which is bent in the shape of a U, are fastened with their base to the wing element (6) and with legs (13) are directed towards the body part (7).

17. Front structure (16) according to Claim 16, **characterised in that** the ends, remote from the base, of the legs (13) of the U-shaped portion (12) of the deformation members (10) are adjoined by portions (14) extending parallel to the body part (7), and that the parallel-extending portions (14) are adjoined by legs (15) which are directed towards the body part (7) .

18. Front structure (16) according to at least one of Claims 2 to 17, **characterised in that** the deformation members (10) support the wing element (6) solely vertically.

19. Front structure (16) according to at least one of Claims 2 to 18, **characterised in that** the deformation members (10) are formed as individual components which are fastened to the wing element (6) and the body part (7).

20. Front structure (16) according to at least one of Claims 2 to 19, **characterised in that** the deformation members (10) are fastened to a water channel (9) which is disposed at a boundary of the wing element (6) which faces the bonnet (4).

## Revendications

1. Structure avant (1, 16) pour un véhicule automobile comprenant des ailes (6, 19) avant vues dans le sens de marche prévu, avec une partie de carrosserie (7, 18) disposée à distance au-dessous des ailes (6, 19) et un dispositif de déformation (8, 34) disposé entre la partie de carrosserie (7, 18) et les ailes (6, 19), le dispositif de déformation (8, 34) présentant une pièce de remplissage (11, 17, 30) souple et fabriquée en matière plastique et la pièce de remplissage (11, 17, 30) fermant un intervalle entre la partie de carrosserie (7, 18) et l'aile (6, 19), **caractérisée en ce que** la pièce de remplissage (11, 17, 30) soutient latéralement la zone latérale de l'aile (7, 19).

2. Structure avant (1, 16) selon la revendication 1, **caractérisée en ce que** le dispositif de déformation (8, 34) présente des organes de déformation (10, 24) fabriqués en tôle et **en ce que** la pièce de remplissage (11, 17, 30) est disposée entre les organes de déformation (10, 24).

3. Structure avant (1, 16) selon la revendication 1 ou 2, **caractérisée en ce que** la pièce de remplissage (11, 17, 30) s'étend, vue dans le sens de marche, sur toute la longueur de l'aile (6,19).

4. Structure avant (1, 16) selon au moins l'une des revendications précédentes, **caractérisée en ce que** la pièce de remplissage (11, 17, 30) est fabriquée d'une seule pièce.

5. Structure avant (16) selon au moins l'une des revendications précédentes, **caractérisée en ce que** la pièce de remplissage (17) présente une couche (27) de caoutchouc cellulaire sur sa face adjacente à l'aile (19).

6. Structure avant (1, 16) selon au moins l'une des revendications précédentes, **caractérisée en ce que** la pièce de remplissage (11, 17, 30) est collée sur la partie de carrosserie (7, 18) et/ou l'aile (6, 19).

7. Structure avant (1, 16) selon au moins l'une des revendications précédentes, **caractérisée en ce que** la pièce de remplissage (11, 17, 30) ferme de façon étanche au gaz l'espace entre l'aile (6, 19) et la partie de carrosserie (7, 18).

8. Structure avant (16) selon au moins l'une des revendications précédentes, **caractérisée en ce que** la pièce de remplissage (17, 30) présente des nervures de déformation (21).

9. Structure avant (16) selon la revendication 8, **caractérisée en ce qu'**un tronçon (20) présentant les nervures de déformation (21), de la pièce de remplissage (17, 30) est disposé entre des points de vissage avec l'aile (19) et/ou la partie de carrosserie (18).

10. Structure avant (16) selon la revendication 8 ou 9, **caractérisée en ce que** les nervures de déformation (21) sont guidées, inclinées verticalement, de l'aile (19) à la partie de carrosserie (18) et horizontalement jusqu'à la zone latérale de l'aile (19).

11. Structure avant (16) selon au moins l'une des revendications précédentes, **caractérisée en ce que** la pièce de remplissage (17) a une structure de forme ondulée, des ondulations (23) de la pièce de remplissage (17) étant disposées parallèlement à l'arête contiguë à l'aile (19).

12. Structure avant (16) selon au moins l'une des revendications précédentes, **caractérisée en ce que** la pièce de remplissage (17) est vissée avec la partie de carrosserie (18) et/ou l'aile (19).

13. Structure avant (16) selon au moins l'une des revendications précédentes, **caractérisée en ce que** la pièce de remplissage (17) a des moyens de retenue prévus pour la fixation de composants à poser dans un compartiment moteur (28).

14. Structure avant (16) selon au moins l'une des revendications précédentes, **caractérisée en ce que** la pièce de remplissage (30) présente une chambre (31) recouverte par un cache (32).

15. Structure avant (16) selon au moins l'une des revendications précédentes, **caractérisée en ce que** le cache (32) est relié au moyen d'une charnière à film (33) à une délimitation latérale de la chambre (31).

16. Structure avant (16) selon au moins l'une des revendications précédentes, **caractérisée en ce que** les organes de déformation (10) présentent une partie (12) pliée en U, sont fixés par leur base à l'aile (6) et sont dirigés par des branches (13) vers la partie de carrosserie (7).

17. Structure avant (16) selon la revendication 16, **caractérisée en ce que** des parties (14) guidées parallèlement à la partie de carrosserie (7) se raccordent sur les extrémités, opposées à la base, des branches (13) de la partie (12) en U des organes de déformation (10) et **en ce que** des branches (15) dirigées vers la partie de carrosserie (7) se raccordent sur les parties (14) guidées parallèlement.

18. Structure avant (16) selon au moins l'une des revendications 2 à 17, **caractérisée en ce que** les organes de déformation (10) soutiennent l'aile (6) exclusivement verticalement.

19. Structure avant (16) selon au moins l'une des revendications 2 à 18, **caractérisée en ce que** les organes de déformation (10) sont réalisés sous forme de composants individuels fixés sur l'aile (6) et la partie de carrosserie (7).

20. Structure avant (16) selon au moins l'une des revendications 2 à 19, **caractérisée en ce que** les organes de déformation (10) sont fixés sur un canal d'évacuation d'eau (9) disposé sur la délimitation, disposée vers le capot (4), des ailes (6).
